# EUROPEAN PATENT SPECIFICATION

(11) **EP 3 589 230 B1**
(45) Date of publication and mention of the grant of the patent: **20.10.2021**
(21) Application number: 18710732.1
(22) Date of filing: 01.03.2018
(51) Int. Cl.: A61C 9/00

(54) **MOTOR DRIVEN DISPENSER**
MOTORISIERTER SPENDER
DISTRIBUTEUR À MOTEUR

(30) Priority: 01.03.2017 US 201762465176 P
(43) Date of publication of application: 08.01.2020
(73) Proprietor: Dentsply Sirona Inc., York, PA 17401 (US)
(72) Inventor: PIERSON, Paul R., York, Pennsylvania 17401 (US); REAGAN, Joseph, York, Pennsylvania 17401 (US); BARTLETT, Daniel W., York, Pennsylvania 17401 (US); KILE, Jeremy, York, Pennsylvania 17401 (US); MORAN, Vicky L., York, PA 17404 (US)
(74) Representative: Özer, Alpdeniz
(86) International application number: PCT/US2018/020443
(87) International publication number: WO 2018/160830

(56) References cited:
- US-A1- 2006 063 126
- US-A1- 2014 036 616
- US-B1- 6 319 002

## Description

### BACKGROUND

The present disclosure relates generally to a motor driven dental dispenser and more specifically to a dental dispenser for the motorized extrusion and precise placement of dental materials such as wash viscosity impression material, core build up materials and restorative composites.

It is known in the dental art to provide motor driven tools, such as for example, drills, polishing discs, prophylactic devices, and the like. It is also known in the art to provide such devices in the form of a handpiece that the dental professional can grasp and use to manipulate the tool. It is beneficial to provide such devices with various controls such as on/off switches, speed controls, or the like. When the dental professional is manipulating such devices and their associated controls, it often proves difficult to efficiently handle the tools for long periods of time due to length and weight restrictions and well as grip style which is usually a pistol style grip. Moreover, available handpieces are limited in their ability to interface with 3rd party products.

US Patent No. 9,283,059 describes an air powered pneumatic dispenser that aids in precision placement of a tissue management impression material.

US Patent No. 8,568,141 discloses linearly motorized dental syringe comprising a rotating cylindrical body located coaxially to a main housing and operated by a drive shaft and a locking ring that rotates to engage a split nut on the external threads of a plunger rod. The threaded plunger rod is not attached to the motor directly and nests within the rotating cylindrical body, advancing and retracting with the split nut engagement.

US Patent No. 8,192,198 discloses a squeezing gun for two-part medical viscous fluid that simultaneously squeezes two different kinds of medical viscous fluid contained in a double cartridge. Scroll bars advance under the influence of gears and a spring is used to bias the scroll bars towards the rear. In another implementation, a pair of clutches is biased against threaded scroll bars that rotate.

US Patent No. 6,319,002 discloses a handheld device for applying dental materials which comprises a retractable plunger with a hollow, threaded bore for engagement with a threaded drive shaft, the hollow plunger allowing the drive shaft to nest within plunger.

US Patent No. 5,771,925 discloses a soap dispenser and wash signal device comprising a signaling timer dispenser that indicates the beginning and end of a hand washing cycle. The signaling device is mounted in the housing of the soap dispenser which has a pivotally mounted soap dispensing handle; and when pivotally moving the soap dispensing handle, the movement of the handle causes activation of the signaling device.

In US Patent No. D729, 400, Hayman discloses a gun shaped mixing and dispensing device with a pistol style grip.

US Patent Application Publication No. 2014/0036616 discloses dispensing and mixing systems comprising a motorized dispenser with a linear drive mechanism for use with vessels containing materials to be mixed and a dynamic mixer driven by a second drive mechanism.

US2006/0063126 discloses an apparatus for dispensing material during a dental or endodontic procedure.

US2014/0036616 discloses a device for dispensing and mixing multi-component materials, in particular for viscous fluid materials.

### SUMMARY

It is desirable in many uses to provide a motorized dispenser for use with cartridges of different sizes. The disclosure generally relates to a device for use with impression material cartridges, and more specifically to a motorized dental dispenser, comprising a housing with a proximal end and a distal end, the housing including a plunger disposed therein, a cap with a first end and a second end, the cap removably attached to said housing, and a charging base with a top portion, a bottom portion and an extension, the extension formed contiguously with the top portion and adapted to receive the dispenser for charging, wherein the second end of the cap leads to a cavity for receiving impression material cartridges of different sizes, and wherein the housing is configured to house an electric motor for operably engaging said plunger to expel impression material from the impression material cartridge. This will provide power assisted delivery for the precise placement of dental materials such as wash viscosity impression materials. Delivery of other materials such as core build up materials and restorative components can also be realized.

There has thus been outlined, rather broadly, some of the features of the device in order that the detailed description thereof may be better understood, and in order that the present contribution to the art may be better appreciated. There are additional features that will be described hereinafter.

The invention is defined in the claims.

An objective is to provide a dispenser with nested plungers to reduce the overall length and width of the dispenser.

Another objective is to provide a dispenser operated by activation buttons or other means on the distal end of the dispenser, so that a user such as a dentist or hygienist can activate the dispenser with their finger when grasping the dispenser with a pen grip.

Another objective is to provide a dispenser with dispensing speeds that change incrementally.

Yet another objective is to provide a dispenser with a wireless foot pedal to provide variable speed control.

An objective of the disclosure is to provide a dispenser with audible alarms for working and setting times.

Another objective is to provide a dispenser with a rechargeable battery and a base for receiving and charging a dispenser.

Yet another objective of the present disclosure is to provide a dispenser with a cap and springs wherein the springs bias the cap in a forward position, taking up any looseness between the cap and the dispenser.

Another objective is to provide a dispenser wherein the electronics of the dispenser are sealed to prevent fluid ingress. A charging base to receive the dispenser may also have drainage holes underneath to prevent accumulation of fluids.

An objective is to provide a dispenser with a current sensing to automatically determine cartridge sizes and plunger position.

Other objectives and advantages of the present disclosure will become obvious to the reader and it is intended that these objectives and advantages are within the scope of the present disclosure. To the accomplishment of the above and related objectives, this device may be embodied in the form illustrated in the accompanying drawings, attention being called to the fact, however, that the drawings are illustrative only, and that changes may be made in the specific construction illustrated and described within the scope of this application.

### BRIEF DESCRIPTION OF THE DRAWINGS

Various other objectives, features and attendant advantages of the present disclosure will become fully appreciated as the same becomes better understood when considered in conjunction with the accompanying drawings, in which like reference characters designate the same or similar parts throughout the several views, and wherein:
Fig. 1a is a top view of an embodiment of the present disclosure showing the dispenser housing with a cap attached to it.
Fig. 1b is a side of the embodiment of Fig. 1a.
Fig. 1c is a bottom view of the embodiment of Fig. 1a showing charging contacts used to charge the dispenser.
Fig. 1d is a perspective view of the embodiment of Fig. 1a.
Fig. 1e is a perspective view of the embodiment of Fig. 1a with the cap removed.
Fig. 2a is a top view of an embodiment of the disclosure showing the cap and cartridge mixtip assembly attached to the dispenser housing.
Fig. 2b is a perspective view of an embodiment of the disclosure illustrating the cap and cartridge mixtip assembly attached to the dispenser housing.
Fig. 2c is a perspective view of an embodiment of the disclosure illustrating the cap and cartridge mixtip assembly decoupled from the dispenser housing.
Fig. 2d is a side view of an embodiment of the disclosure illustrating the cap and cartridge mixtip assembly attached to the dispenser housing.
Fig. 2e is a bottom view of an embodiment of the disclosure illustrating the cap and cartridge mixtip assembly attached to the dispenser housing.
Fig. 3a illustrates a top view of a cap according to the present disclosure.
Fig. 3b shows a side view of a cap according to the present disclosure.
Fig. 3c illustrates a perspective view of a cap according to the present disclosure
Fig. 3d is a perspective view of a cap and a cartridge mixtip assembly according to the present disclosure.
Fig. 3e shows a top view of a cap attached to a cartridge mixtip assembly of the present disclosure.

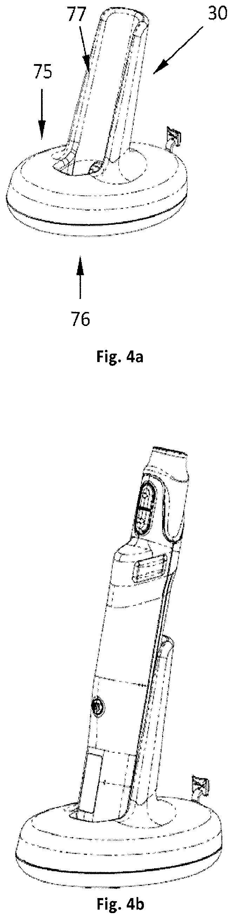

Fig. 4a is an illustration of a perspective view of a base of the present disclosure.
Fig. 4b illustrates a perspective view of a dispenser resting in a base.
Fig. 5 is a process flow chart for cartridge size detection according to an embodiment of the disclosure.
Fig. 6 shows an exploded view of a dispenser according to the present disclosure.
Fig. 7a is a cross sectional side view of an embodiment of the present disclosure.
Fig. 7b is a cross sectional top view of an embodiment of the present disclosure.
Fig. 8a is a cross sectional view showing cap with cartridge mixtip assembly fully seated.
Fig. 8b is a cross sectional view showing cap and cartridge mixtip assembly of Fig. 8a fitted onto the dispenser housing.
Fig. 9a is a cross sectional view illustrating cap with cartridge mixtip assembly, not fully seated.
Fig. 9b is a cross sectional view illustrating cap with cartridge mixtip assembly unable to fit into the dispenser body due to interference of the dispenser rib and snap arm of cap.
Fig. 10a is a perspective view of plungers according to the present disclosure.
Fig. 10b is a front view of plungers illustrating plunger rod threaded base and upper channel.
Fig 11 is a cross sectional view showing the spring biasing mechanism for cap and the plungers nested around the lead screw according to the present disclosure.

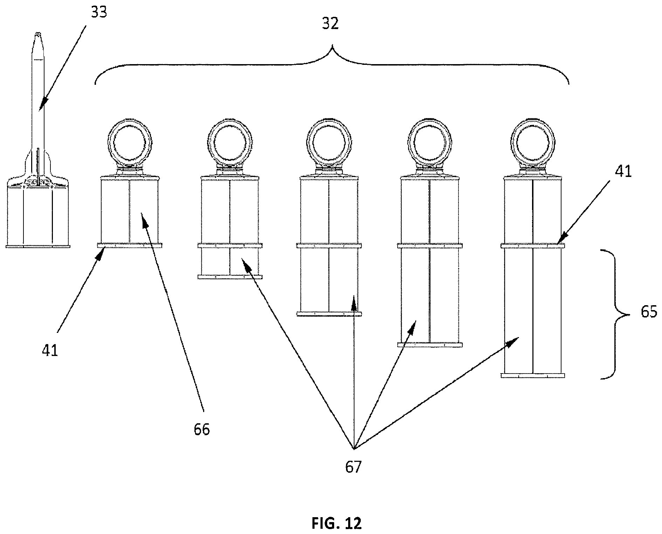

Fig. 12 illustrates different cartridge sizes according to the present disclosure.

### DETAILED DESCRIPTION

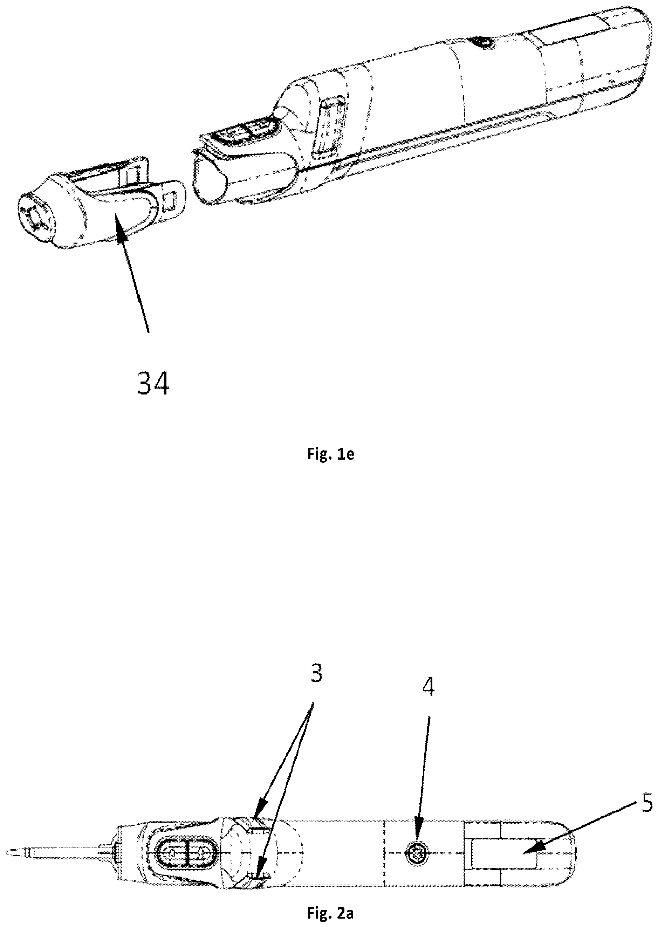

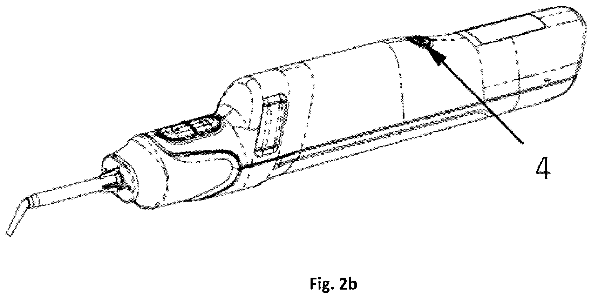

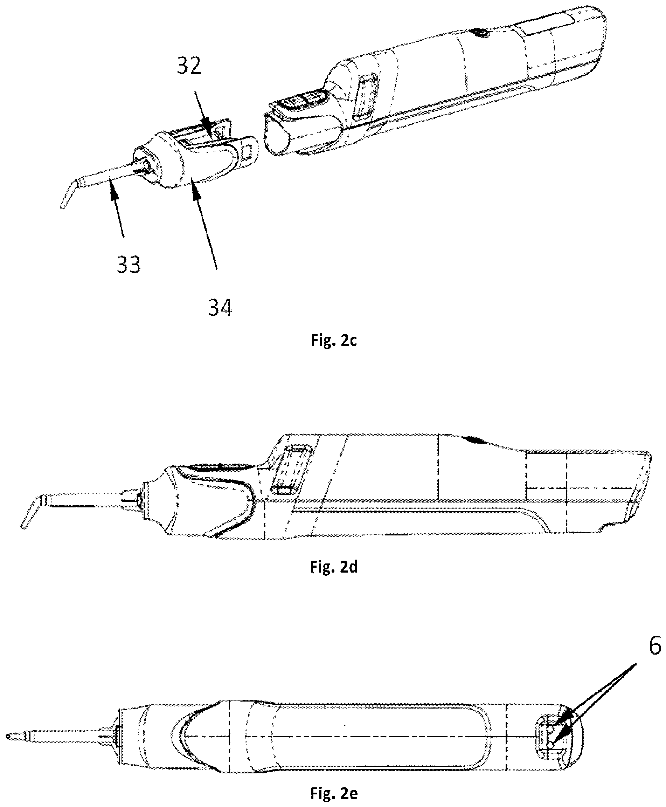

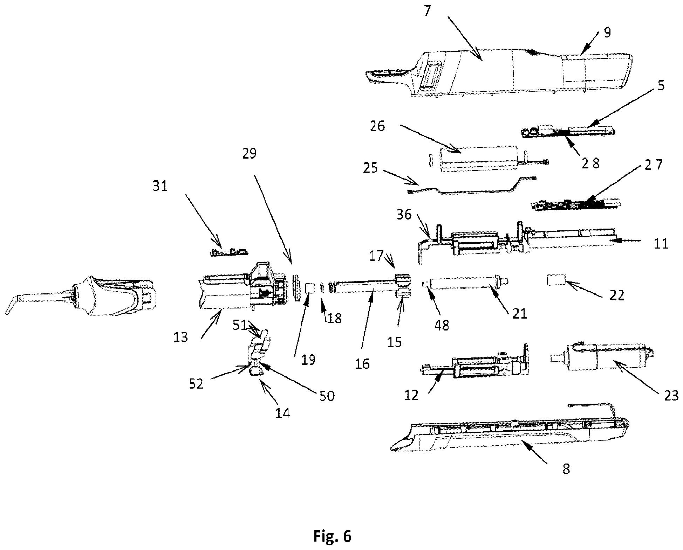

Turning descriptively to the drawings, in which similar reference characters denote similar elements throughout the several views, the figures illustrate a linear cartridge-receiving motorized dental device for the extrusion and precise placement of dental materials. Referring to the accompanying drawings, particularly, Fig. 2c and Fig. 6 therein, the dispenser comprises a housing with a proximal end and a distal end, the dispenser generally indicated by reference number 10. The dispenser further comprises a cap 34 with a first end 73 and a second end 74, the second end 74 leading to a cavity for receiving impression material cartridges 32 of different sizes. The device also includes and a charging base 30 with a top portion 75, a bottom portion 76 and an extension 77, the extension 77 contiguously formed from the top portion 75 and adapted to receive the dispenser 10 for charging, wherein the dispenser housing is removably attached to the cap 34, and wherein said dispenser 10 is configured to house an electric motor 23 and plungers 16 for operably expelling impression material from the impression material cartridge 32.

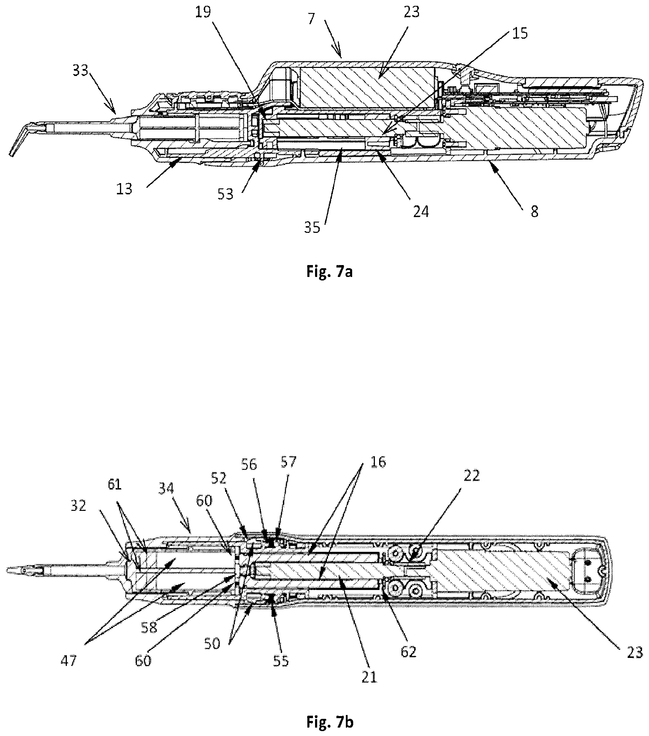

In particular, the dispenser 10 comprises an upper outer housing 7 and a lower outer housing 8 adapted to contain a battery and a DC electric motor 23 therein. The electric motor 23 turns a lead screw 21, the lead screw 21 being coupled to the motor 23 by a transmission coupler 22. As shown in Figs. 7a and 7b plungers 16 are integrally connected to a threaded base 15 that mates with the lead screw 21. The plunger rod threaded base 15 is located at the proximal end of the plunger rods 16. Alternatively, the threads may be insert-molded into the base of said plunger rods 16 or attached as a separate threaded nut. Rotation of the lead screw 21 displaces the plungers 16 forward or backward as desired. The motor 23 may be powered by a rechargeable battery 26, which may have a safety protection circuit (not shown) to prevent overheating. The distal end of the lead screw 21 is stabilized and aligned by a bushing 19. A short shaft 48 on the distal end of the lead screw 21 rotates freely in the stabilizing bushing 19.

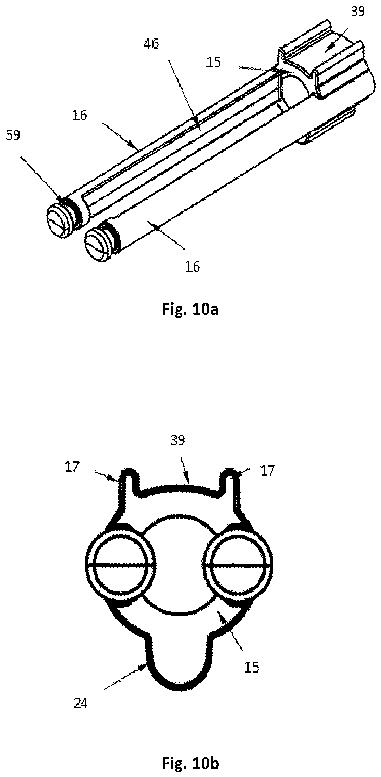

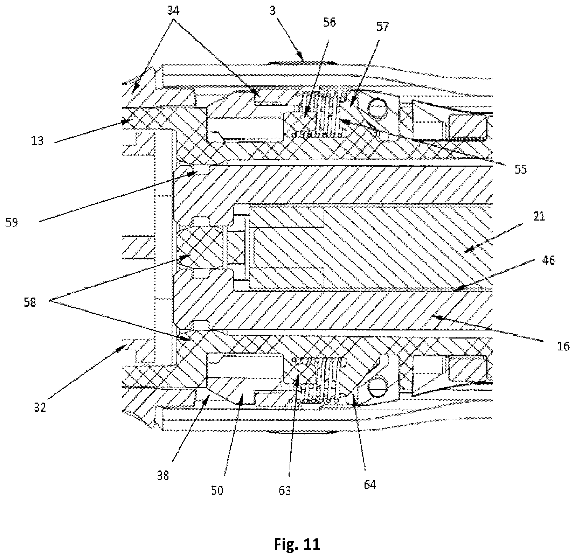

The plungers 16 may be nested around the lead screw 21 to reduce the overall length of the dispenser 10. As shown in Figs. 10a and 11, the nesting may be produced by cutting away the inner surface 46 of each plunger 16 where it would otherwise interfere with the lead screw 21. To this end, the cartridge chambers 47 will be located closer together, thereby also reducing the overall width of the dispenser 10, which is advantageous when grasping the dispenser 10 with a pen style grip. Referring to Fig. 7a and Fig. 10b, the plunger rod threaded base 15 may have an appendage 24 on the bottom that slides freely in a channel 35 within the lower inner frame 12. The channel 35 is aligned with the axis of the lead screw 21. The channel 35 prevents the plunger rod threaded base 15 from rotating due to frictional forces of the lead screw 21, which therefore transfers the rotational movement of the motor 23 into axial movement of the plunger rods 16. The upper portion of the plunger rod threaded base 15 may have two vertical extensions 17 extending in the opposite direction of the bottom appendage 24 and forming an upper channel 39 that slides freely on an upper guide bar 36 in the upper inner frame 11. Similarly, the vertical extensions 17 and upper guide bar 36 also prevent rotation of the plunger rod threaded base 15. The dispenser 10 may have a main printed circuit board (PCB) 27 over the motor 23, which controls the electronic functions of the dispenser 10. A Printed Circuit Board 28 may have a digital display 5 that shows through a window 9 in the upper outer housing 7, indicating the charging status of battery 26, as well as other parameters including mode setting and a count-down timer for scheduling a set time of the impression material. The PCB 28 may have Light Emitting Diodes (LED) which illuminate through a display label (not shown) on the outside of the upper outer housing 7, which could indicate similar functional and operational states for the user.

The outside walls of the plunger rod threaded base 15 may have short ribs that extend on either side and slide freely in a groove created between the upper inner frame 11 and lower inner frame 12. The two grooves are aligned with the axis of the lead screw 21. The groves prevent the plunger rods from rotating due to frictional forces of lead screw 21, which therefore transfers the rotational movement of the motor 23 into axial movement of the plungers 16.

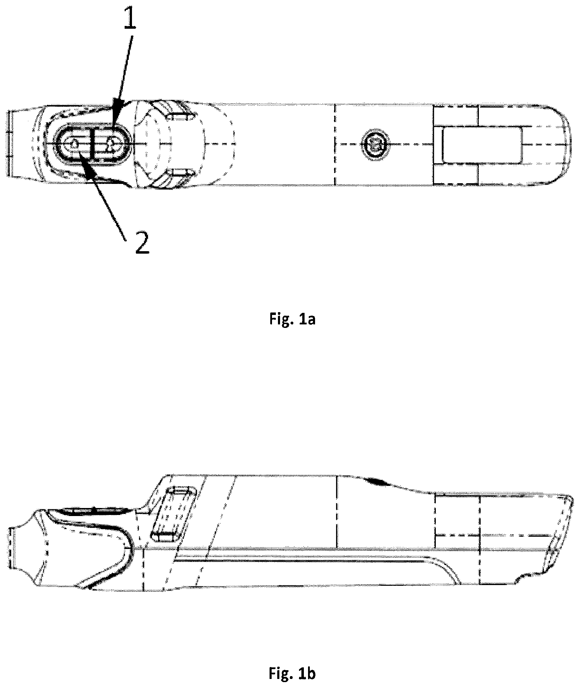

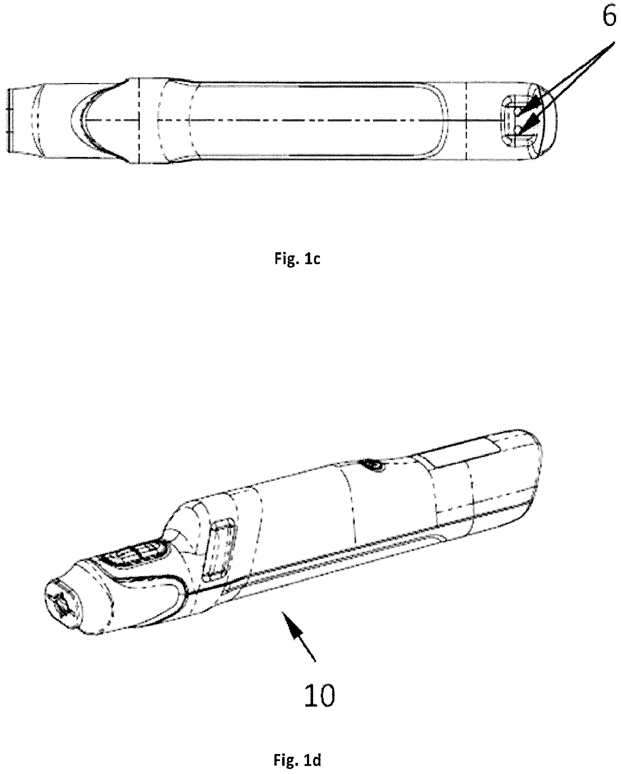

As will be seen in Figs 1a, 2c, the dispenser 10 is operated by activation buttons 1 and 2 or other similar means on the distal end of the dispenser 10, allowing the practitioner to activate the dispenser 10 with their finger when grasping the dispenser 10 with a pen grip. The buttons may be located on an activation button PCB 31 which extends over an opening in the nose 13 located at the distal end of the dispenser 10. Said nose 13 is configured to receive cap 34, which is preloaded with a cartridge mixtip assembly 20. The activation button PCB 31 is positioned parallel to the horizontally oriented cartridge mixtip assembly 20, thereby reducing the size of dispenser 10 as opposed to a larger size for a vertically oriented cartridge mixtip assembly 20.

To operate the device, the user depresses one of the activation buttons 1 or 2 to start the motor 23 and advance the plungers 16. The user releases the activation buttons 1 or 2 to stop dispensing. Preferably, the front button is a preset slow activation button 2 and the rear button is a preset fast activation button 1.

In accordance with an embodiment of the present disclosure, a multi-position rocker switch may be used in the dispenser with each position of the switch relating to incremental dispensing speeds.

In accordance with another embodiment, the dispenser 10 may have a wireless Bluetooth foot pedal (not shown) that provides variable speed control. When paired with the foot pedal the Bluetooth symbol may appear on display 5 within window 9. When dispenser 10 is paired with the Bluetooth foot pedal, the foot pedal overrides the activation buttons 1 and 2. The practitioner may control the dispensing speed with the foot pedal by depressing the foot pedal lightly for slow speeds and more heavily for faster speeds. Preferably, the speed can vary between off and a preset maximum speed corresponding to the fast activation button 1.

In an embodiment, where balance is more important than weight, battery 26 may be positioned over the hand for balance rather than in-line with the motor 23. This results in a shorter dispenser 10 and helps reduce fatigue during use.

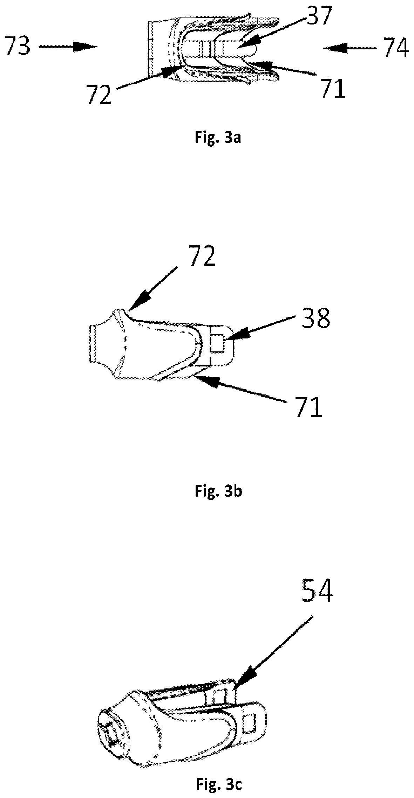

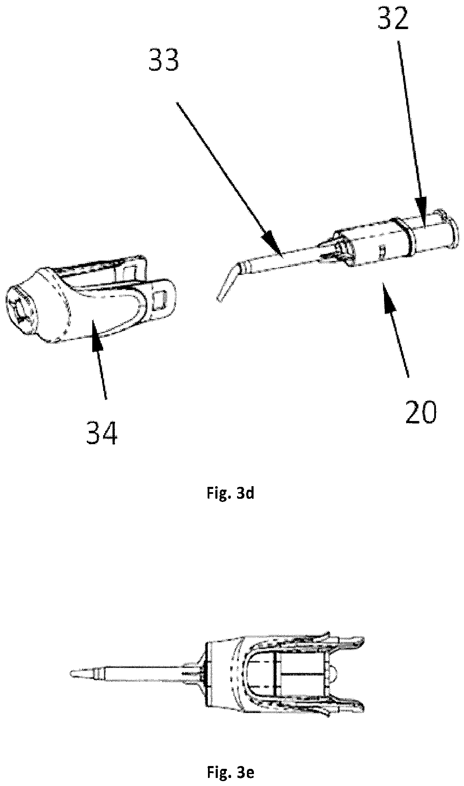

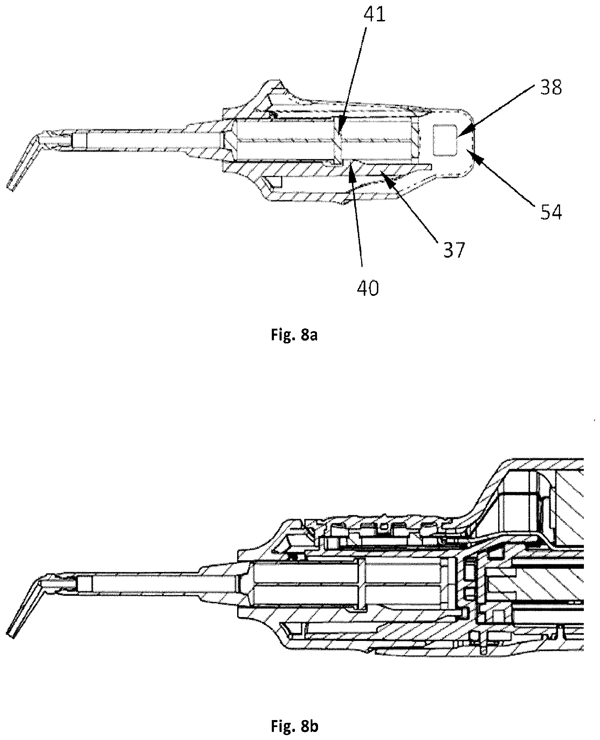

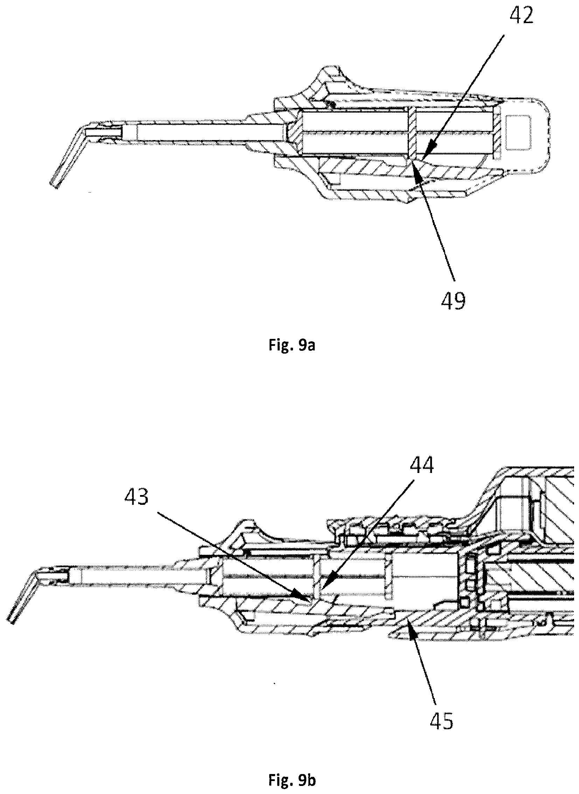

In a further embodiment, the cap 34, may have a snap arm 37 that snaps over cartridge flange 41 on the cartridge 32. Referring to Figs. 8a, 8b, 9a, 9b, the proximal end of clip 40 has a ramp 42, so that when cartridge mixtip assembly 20 is pushed into cap 34 ramp 42 rides up over cartridge flange 41. When cartridge 32 is pushed in all the way, the vertical distal wall 43 of clip 40, snaps over the vertical proximal wall 44 of cartridge flange 41. Therefore clip 40 holds cartridge 32 stationary and prevents it from being displaced rearward due to the hydraulic forces within mixtip 33 during dispensing. Snap arm 37 makes an audible click when clip 40 engages cartridge flange 41, providing the user with feedback that cartridge mixtip assembly 20 is fully seated and secured by the snap arm 37. To remove cartridge 32, the user removes cap 34 and flexes snap arm 37 outwardly until clip 40 disengages from cartridge flange 41 and empty cartridge 32 can be removed. If cartridge mixtip assembly 20 is not fully seated in cap 34, cap 34 cannot be applied to the dispenser housing. Before snap arm 37 snaps into place it is bent outwardly because it interferes with flange edge 49 of cartridge mixtip assembly 20. In this outward position, the proximal end of snap arm 37 is in a position that interferes with the distal surface of rib 45. The interference of snap arm 37 with rib 45 prevents cap 34 from being pushed on to dispenser housing if the cartridge mixtip assembly 20 is not fully seated. This provides the user with feedback that cartridge mixtip assembly 20 and cap 34 are improperly assembled. Given this feedback the user is aware of the need to remove cap 34 and reseat cartridge mixtip assembly 20. When cartridge mixtip assembly 20 is fully seated and clip 40 is secured on cartridge flange 41, snap arm 37 is flexed in its normal position and lays flush with the side of the cartridge mixtip assembly 20. In this flush position the proximal end of snap arm 37 clears the distal end of the rib 45 and cap 34 can be properly attached to dispenser housing. Furthermore, the cap 34 may have a U-shaped cut outs 71, 72, Fig. 3b on the top and bottom to make it easier to load or unload the cartridge 32.

In an embodiment, a cap release clip 14 may secure cap 34 to the housing. Cap release clip 14 is preferably a plastic component. The clip 14 may wrap around the outside proximal end of nose 13 and may be secured with a heat stake 53 or other similar attachment. The clip 14 fits around nose 13 with clearance to permit inward flexing. In its normally un-flexed position, upper tabs 51 on cap release clip 14 are biased outwardly against the inner surface of flexible side cap release buttons 3 on outer upper housing 7. Also, lower tabs 50 on the outer sides of cap release clip 14 are biased outwardly and mate with square holes 38 in the proximal end of the cap 34. The distal surfaces of the lower tabs 50 have angled leading faces 52. When the cap 34 is pushed onto the housing, the inner cap surface 54 rides over the angled leading faces 52 of lower tabs 50 and compresses cap release clip 14 into a flexed position. When cap 34 is fully attached cap release clip 14 snaps outwardly and the lower tabs 50 lock into the square holes 38, locking cap 34 securely in place. To remove cap 34, the user presses flexible side cap release buttons 3 on the outside of upper outer housing 7, flexing the upper tabs inwards and compressing the diameter of cap release clip 34 into a smaller diameter. As the diameter decreases, lower tabs 50 withdraw from square holes 38, thereby releasing the cap 34.

In another embodiment, the springs 55 may bias cap 34 in a forward position. The springs may be held in place between a distal spring post 56 and a proximal spring post 57. Preferably there are two springs 55, one on either side of nose 13 positioned behind the lower tabs 50 of the cap release clip 14. The springs 55 are held in a slightly compressed state between distal post wall 63 and proximal post wall 64 that support the two posts 56 and 57. The distal spring post 56 has a semi-circular cross section, so that the outer most portion of the spring 55 relative to the lead screw 21 axis is unsupported by distal post wall 63. This unsupported outer portion of the spring 55 is in a position relative to the cap 34 to be compressed by the proximal end of the cap 34. When cap 34 is placed on housing and snaps onto lower tabs 50, the proximal end of the cap 34 compresses the springs which biases cap 34 forward, taking up any looseness between the cap 34 and the housing. This biasing spring force also helps disengage cap 34 when the side cap release buttons 3 are depressed by moving lower tabs 50 inward and out of engagement with square hole 38 and providing positive tactile feedback for the user when placing and removing cap 34.

Another embodiment for the cap release mechanism comprises a single cap release button on top of housing over the cap release clip 14, which pushes down on a Y-shaped arm that compresses the armatures supporting upper tabs 51, thereby releasing cap 34. Alternatively, a motorized release mechanism may be used for the cap release mechanism. Further, the mechanism that biases cap 34 forward may be realized with use one or more springs. Forms of springs that could be incorporated include wave springs, leaf springs, or spring wires.

Another embodiment of the cap release mechanism that locks cartridge mixtip assembly 20 into cap 34 is to use a flexible latch consisting of a flexible plastic that compresses as the cartridge mixtip assembly 20 is inserted into the cap 34 and snaps into place, locking the cartridge mixtip assembly 20 in place.

The dispenser has audible alarms for Work Time (WT) and Set time (ST). The WT is the time in which a low viscosity material (wash material) may be placed on the tooth preparation and the impression tray may be seated in order to obtain a good impression. If the WT is exceeded the low viscosity material may become a gel and result in an impression defect. The ST is the time at which the impression material is fully set and the practitioner can remove the impression tray from the patient's mouth. If the impression is pulled before the material is fully set, the impression may distort and the crown may not fit the preparation. The WT and ST alarm features are therefore advantageous when taking a dental impression.

In accordance with yet another embodiment, the electronics may be sealed against liquid ingress with a silicone seal or other similar sealant that goes around the perimeter of the dispenser 10, around the body and around the activation button PCB 31. In addition, the plungers 16 may have o-rings 18 that fit in o-ring grooves 59 that seal plunger holes 60 in nose wall 58. Together, the o-rings 18, nose wall 58, plungers 16 and o-ring grooves 59 may form a liquid tight seal with the plunger holes 60, i.e. the sealing position. Software controlling the dispenser 10 may be programmed to return plungers 16 to their sealing position (home position) after Set Time or after the plungers reach the end of the cartridge, whichever comes first. Plungers 16 may also automatically retract to the sealing position upon powering off. This assures that dispenser 10 is always sealed against liquid ingress prior to disinfection . In particular, the dispenser is sealed against disinfection liquids that may be sprayed or wiped on the outside of dispenser or in nose 13.

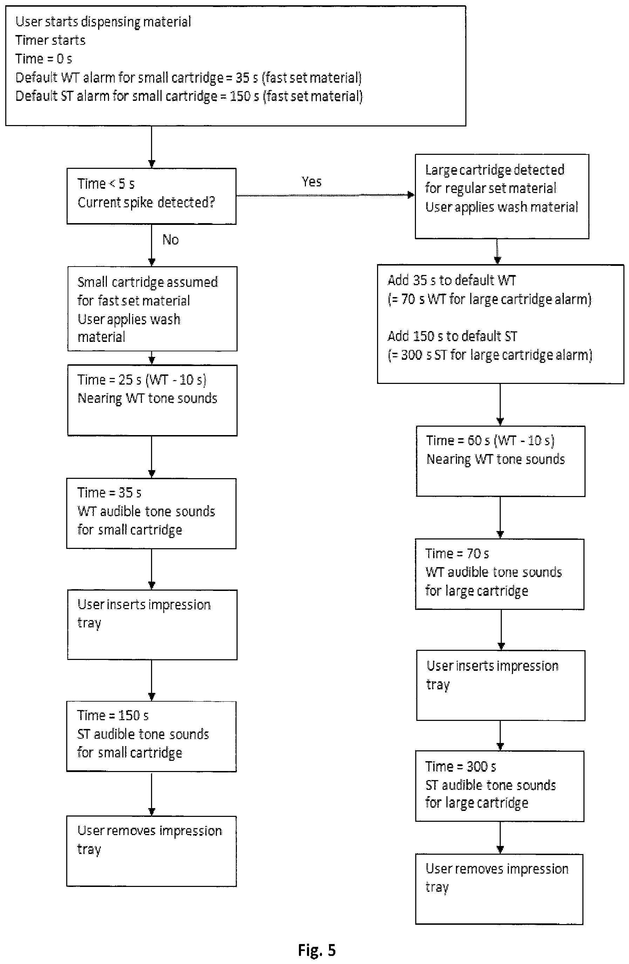

In another embodiment, the dispenser 10 may use current sensing to determine cartridge size, plunger position, adjust speed and prevent over pressurization. The software of device 10 may detect the difference between a small cartridge 66 (without an integral cartridge extension) and a large cartridge 67 (with an integral cartridge extension). When motor 23 meets resistance from the plungers or impression material, the current level in the circuit increases and is detected. This may be detected with a current sense chip, providing a measurement of the current being delivered to the motor 23. These current spikes can be identified as events that correlate to the position of plungers 16. Current detection has proven to be much easier and cost effective than using position sensors for these programmed functions. Current sensing may be used to locate pistons 61 and start the timer for ST and WT alarms. The timer starts automatically when a current spike is detected within a certain time period. For example, referring to the flow chart in Fig. 5, if a spike is detected within 5 seconds the program assumes large cartridge 67 is in place and the timing sequence for regular set material is enacted. If a current spike is not detected within 5 seconds the program assumes small cartridge 66 is in place and the timing sequence for fast set materials is enacted. Due to the lack of an integral cartridge extension for small cartridges 66 the plungers 16 have to travel further before meeting resistance from impression material. Current sensing may also be used to detecting the proper home position. When plungers 16 reach home and o-rings 18 withdraw into the plunger holes 60, a current spike is detected which indicates home position, due to the plunger rod threaded base 15 impacting the rear wall 62,thereby signaling motor 23 to stop. Even further, current sensing may also be used to re-calibrate the home position by periodically (for example, every 10 cycles) contacting the proximal end of plunger rod threaded base 15 against the rear wall 62 and then recalculating the home position which is slightly forward of the bottom out position. This reduces wear and stress on the assembly by making contact only periodically rather than every time. Current sensing may also be used to prevent cartridge 32 and dispenser 10 failures due to over pressurization. For example, when cartridge 32 contains very thick material or mixtip 33 is clogged, dispenser 10 senses the current increase and slows, stops or reverses motor 23 as necessary to prevent a mechanical failure.

The dispenser is designed to dispense material from at least two different cartridge sizes. The different cartridges may contain different amounts of material depending on the specific procedure being performed. For example a small cartridge 66 may contain fast set material and used for impressing 1-2 teeth and a large cartridge 67 may contain regular set material for 3-4 teeth. Accordingly, The WT and ST for the small cartridge 66 is shorter than the WT and ST for the large cartridge 67. For example, the WT for fast set material may be 30 seconds with a 2 minute 35 seconds ST and the WT for regular set material may be 70 seconds with a 5 minute ST. Ideally, the dispenser 10 is able to recognize which size cartridge 32 is being used. Though sensors could be utilized an inexpensive solution is detecting the spike in current when plungers 16 meet resistance due to the contents of cartridge 32. A software program that utilizes feedback from a current level detector may be used to make a determination of which cartridge 32 is in the dispenser 10 and which WT and ST alarms to initiate. Fig. 5 illustrates the process of the software program logic. Referring to Fig. 5, the 5 s checkpoint for a current detection spike is an arbitrary time, known to be between the point where plungers 16 of dispenser 10 make contact with the pistons 61 of large cartridge 67 (causing an early current spike) and the pistons of small cartridge 66 (causing a late current spike). In addition, the WT alarm can be at WT = 0 or the WT can have a safety factor built in so that the practitioner can have a few seconds to safely place the tray within the WT

Another embodiment incorporates an audible warning several seconds before the WT elapses, for example 10 s before the actual WT. This "nearing working time" warning lets the practitioner know that WT is approaching and that he or she should prepare to complete the application. This reduces WT application errors and eliminating impression defects. For example, the nearing WT alarm could be 3 short beeps and the WT alarm could be one long beep as shown in Fig. 5. The impression tray may be inserted before or immediately after WT to avoid impression defects. In another embodiment, a Fast Set mode that contains preset WT warnings and ST alarms that correspond to the specific Fast Set curing characteristics of the impression material in the cartridge may be incorporated. In a further embodiment, a Regular Set mode that contains preset WT warnings and ST alarms that correspond to the specific Regular Set curing characteristics of the impression material in the cartridge may be incorporated. Alternatively, a user set mode may be incorporated wherein the user may preset custom WT and ST values corresponding to specific dental products.

Hall Effect sensors may be used to detect the position of the plungers 16 and to base the software program and timers on such positions. Moreover, an RFID label on the cartridge 32 and an RFID reader in dispenser 10 may be used to communicate and control specific alarms, audible tones, application speeds, etc., based on what product is in cartridge 32. For example, a product may have specific WT and ST which could be unlocked and executed by the RFID label on the cartridge.

The user operates the dispenser by inserting an appropriate size of the cartridge and mixtip assembly into a dispenser cap which is then coupled with the dispenser housing. The user selects one of two preset operation modes, Fast Set or Regular Set corresponding to the Set Time of the material in the cartridge. If the user prefers to utilize the User Set operation mode, the user then sets the preferred WT and ST if not already set by default. The user then activates the dispenser by grabbing it with a pen grip and pressing an activation button to start the motor and advance the plungers. The cartridge size is automatically detected based on if an early current spike is generated. The user applies wash material to the tooth preparation. An audible warning signals several seconds before the WT elapses and again when the WT has elapsed. An impression tray is inserted into the mouth before or immediately after WT tone sounds are heard. This is done before the wash material sets in order to obtain a good impression. The user then waits for the impression material to set (when ST audible tone sounds are heard) before removing the impression tray.

## Claims

1. A motorized dental dispenser (10), comprising:
a housing (7,8) with a proximal end and a distal end;
nested plungers (16) disposed within the housing (7,8), nested around a screw (21) and connected to a first portion of the screw (21);
an electric motor (23);
a cap (34) with a first end (73) and a second end (74), the cap (34) removably attached to said housing (7,8);
wherein the second end (74) of the cap (34) leads to a cavity for receiving a first cartridge mixtip assembly (20), and
wherein the cap is constructed to receive a second cartridge mixtip assembly wherein a size of the second cartridge mixtip assembly is different from a size of the first cartridge mixtip assembly;
a current sensor configured to automatically determine a size of a cartridge of the cartridge mixtip assembly or a position of the nested plungers,
wherein the housing (7,8) is configured to house the electric motor (23) for operably engaging said screw (21) at a second portion of the screw (21) such that rotation of the screw (21) displaces the nested plungers (16) linearly to expel dental material from the first or second cartridge mixtip assembly; and
audible alarms for Work Time (WT) and Set time (ST), and wherein the Work Time (WT) is a time in which the dental material can be placed on a tooth preparation and an impression tray can be seated in order to obtain a good impression and wherein the Set time (ST) is a time at which the dental material is fully set and the impression tray can be removed.

2. The motorized dental dispenser (10) according to Claim 1, further comprising; a charging base (30) with a top portion (75), a bottom portion (76) and an extension (77), the extension (77) formed contiguously with the top portion (75) and adapted to receive the dispenser (10) for charging.

3. The motorized dental dispenser (10) according to Claim 1, wherein the cap (34) includes a snap arm (37) that snaps over a cartridge flange (41) of the cartridge mixtip assembly (20).

4. The motorized dental dispenser (10) according to Claim 1, wherein the cap (34) includes U- shaped cutouts (71,72) for easy insertion or removal of the cartridge (32) of the cartridge mixtip assembly (20).

5. The motorized dental dispenser (10) according to Claim 1, wherein the dental material is an impression material, a core build up material or a restorative material.

6. The motorized dental dispenser (10) according to Claim 1, further comprising a button (1,2) for activating the dispenser with a finger when grasping the dispenser with a pen style grip.

7. The motorized dental dispenser (10) according to Claim 1, wherein the dispenser is provided with a multi position rocker or a wireless Bluetooth pedal in communication with the electric motor (23) to change a dispensing speed.

8. The motorized dental dispenser (10) according to Claim 7, wherein the dispensing speed is changed incrementally.

9. The motorized dental dispenser (10) according to Claim 1, wherein the current sensor is a current sense chip.

10. A method of operating a motorized dental dispenser (10) according to any one of the preceding claims, the method comprising the steps of:
providing a motorized dental dispenser (10) having nested plungers (16) for extruding dental material,
inserting a cartridge mixtip assembly (20) into a cap (34) and coupling the cap (34) with a housing (7,8) of the dispenser (10),
selecting a predetermined operational mode corresponding to a setting time of the dental material of the cartridge mixtip assembly (20),
determining a cartridge size or nested plungers position based on generated current spikes, and
providing audible warning signals corresponding to the Work Time (WT) and Set time (ST) of the determined cartridge size.

11. The method according to Claim 10, further comprising determining recalibrating a home position of the nested plunger (16) to reduce wear by periodically contacting a proximal end of a plunger rod threaded base against a rear wall and sensing a current generated.

12. The method according to Claim 10, wherein the Work Time (WT) for a fast set material is about 30 seconds and the Set Time (ST) for the fast set material is about 2 minutes 35 seconds.

13. The method according to Claim 10, wherein the Work Time (WT) for a regular set material is about 70 seconds and the Set Time (ST) for the regular set material is about 5 minutes.

14. The method according to Claim 10, wherein the position of the nested plungers (16) is determined with Hall Effect Sensors.

## Patentansprüche

1. Motorisierter Dentalspender (10), der umfasst:
ein Gehäuse (7, 8) mit einem proximalen Ende und einem distalen Ende;
verschachtelte Kolben (16), die innerhalb des Gehäuses (7, 8) um eine Schraube (21) verschachtelt angeordnet und mit einem ersten Abschnitt der Schraube (21) verbunden sind;
einen Elektromotor (23);
eine Kappe (34) mit einem ersten Ende (73) und einem zweiten Ende (74), wobei die Kappe (34) abnehmbar an dem Gehäuse (7, 8) befestigt ist;
wobei das zweite Ende (74) der Kappe (34) zu einem Hohlraum zum Aufnehmen einer ersten Kartuschen-Mischdüsenanordnung (20) führt, und
wobei die Kappe ausgelegt ist, um eine zweite Kartuschen-Mischdüsenanordnung aufzunehmen, wobei eine Größe der zweiten Kartuschen-Mischdüsenanordnung von einer Größe der ersten Kartuschen-Mischdüsenanordnung unterschiedlich ist;
einen Stromsensor, der konfiguriert ist, um automatisch eine Größe einer Kartusche der Kartuschen-Mischdüsenanordnung oder eine Position der verschachtelten Kolben zu bestimmen,
wobei das Gehäuse (7, 8) konfiguriert ist, um den Elektromotor (23) zur betätigbaren Eingriffnahme der Schraube (21) an einem zweiten Abschnitt der Schraube (21) derart aufzunehmen, dass eine Drehung der Schraube (21) die verschachtelten Kolben (16) linear verlagert, um Dentalmaterial aus der ersten oder zweiten Kartuschen-Mischdüsenanordnung auszustoßen; und
hörbare Alarme für Arbeitszeit (WT, Work Time) und Abbindezeit (ST, Set Time), und wobei die Arbeitszeit (WT) eine Zeit ist, in der das Dentalmaterial auf einer Zahnvorbereitung platziert werden kann, und ein Abdrucklöffel eingesetzt werden kann, um einen guten Abdruck zu erhalten, und wobei die Abbindezeit (ST) eine Zeit ist, in der das Dentalmaterial vollständig abgebunden ist, und der Abdrucklöffel entfernt werden kann.

2. Motorisierter Dentalspender (10) nach Anspruch 1, der ferner umfasst; eine Ladebasis (30) mit einem oberen Abschnitt (75), einem unteren Abschnitt (76) und einer Verlängerung (77), wobei die Verlängerung (77) an den oberen Abschnitt (75) angrenzend gebildet und angepasst ist, um den Spender (10) zum Aufladen aufzunehmen.

3. Motorisierter Dentalspender (10) nach Anspruch 1, wobei die Kappe (34) einen Rastarm (37) beinhaltet, der über einem Kartuschenflansch (41) der Kartuschen-Mischdüsenanordnung (20) einrastet.

4. Motorisierter Dentalspender (10) nach Anspruch 1, wobei die Kappe (34) U-förmige Ausschnitte (71, 72) zum leichten Einsetzen oder Entfernen der Kartusche (32) der Kartuschen-Mischdüsenanordnung (20) beinhaltet.

5. Motorisierter Dentalspender (10) nach Anspruch 1, wobei das Dentalmaterial ein Abdruckmaterial, ein Kernaufbaumaterial oder ein Restaurationsmaterial ist.

6. Motorisierter Dentalspender (10) nach Anspruch 1, der ferner einen Knopf (1, 2) zum Aktivieren des Spenders mit einem Finger, wenn der Spender mit einem stiftartigen Griff ergriffen wird, umfasst.

7. Motorisierter Dentalspender (10) nach Anspruch 1, wobei der Spender mit einer Mehrpositionswippe oder einem drahtlosen Bluetooth-Pedal in Kommunikation mit dem Elektromotor (23) zum Ändern einer Spendegeschwindigkeit versehen ist.

8. Motorisierter Dentalspender (10) nach Anspruch 7, wobei die Spendegeschwindigkeit inkrementell geändert wird.

9. Motorisierter Dentalspender (10) nach Anspruch 1, wobei der Stromsensor ein Stromabtastchip ist.

10. Verfahren zum Betreiben eines motorisierten Dentalspenders (10) nach einem der vorstehenden Ansprüche, wobei das Verfahren die Schritte umfasst des:
Bereitstellens eines motorisierten Dentalspenders (10), der verschachtelte Kolben (16) zum Extrudieren von Dentalmaterial aufweist,
Einsetzen einer Kartuschen-Mischdüsenanordnung (20) in eine Kappe (34) und Koppeln der Kappe (34) mit einem Gehäuse (7, 8) des Spenders (10),
Auswählen eines vorbestimmten Betriebsmodus, der einer Abbindezeit des Dentalmaterials der Kartuschen-Mischdüsenanordnung (20) entspricht,
Bestimmen einer Kartuschengröße oder Position der verschachtelten Kolben basierend auf erzeugten Stromspitzen, und
Bereitstellen akustischer Warnsignale, die der Arbeitszeit (WT) und der Abbindezeit (ST) der bestimmten Kartuschengröße entsprechen.

11. Verfahren nach Anspruch 10, das ferner das Bestimmen einer Neukalibrierung einer Ausgangsposition des verschachtelten Kolbens (16) umfasst, um Verschleiß durch periodisches Berühren eines proximalen Endes einer Kolbenstangen-Gewindebasis mit einer Rückwand zu verringern und einen erzeugten Strom abzutasten.

12. Verfahren nach Anspruch 10, wobei die Arbeitszeit (WT) für ein schnell abbindendes Material etwa 30 Sekunden beträgt, und die Abbindezeit (ST) für das schnell abbindende Material etwa 2 Minuten 35 Sekunden beträgt.

13. Verfahren nach Anspruch 10, wobei die Arbeitszeit (WT) für ein regulär abbindendes Material etwa 70 Sekunden beträgt, und die Abbindezeit (ST) für das regulär abbindende Material etwa 5 Minuten beträgt.

14. Verfahren nach Anspruch 10, wobei die Position der verschachtelten Kolben (16) mit Hall-Effekt-Sensoren bestimmt wird.

## Revendications

1. Distributeur dentaire motorisé (10), comprenant :
un boîtier (7, 8) ayant une extrémité proximale et une extrémité distale ;
des pistons emboîtés (16) disposés à l'intérieur du boîtier (7, 8), emboîtés autour d'une vis (21) et connectés à une première partie de la vis (21) ;
un moteur électrique (23) ;
un capuchon (34) ayant une première extrémité (73) et une seconde extrémité (74), le capuchon (34) étant fixé de manière amovible audit boîtier (7, 8) ;
la seconde extrémité (74) du capuchon (34) menant à une cavité destinée à recevoir un premier ensemble embout mélangeur de cartouche (20), et
le capuchon étant construit pour recevoir un second ensemble embout mélangeur de cartouche, la taille du second ensemble embout mélangeur de cartouche étant différente de la taille du premier ensemble embout mélangeur de cartouche ;
un détecteur de courant conçu pour déterminer automatiquement une taille d'une cartouche de l'ensemble embout mélangeur de cartouche ou une position des pistons emboîtés
le boîtier (7, 8) étant conçu pour loger le moteur électrique (23) pour amener en contact fonctionnel ladite vis (21) au niveau d'une seconde partie de la vis (21) de telle sorte que la rotation de la vis (21) déplace les pistons emboîtés (16) de manière linéaire pour faire sortir le matériau dentaire du premier ou du second ensemble embout mélangeur de cartouche ; et
des alarmes sonores pour le temps de travail (WT, Work Time) et le temps de prise (ST, Set Time), et le temps de travail (WT) étant un temps pendant lequel le matériau dentaire peut être placé sur une préparation dentaire et un porte-empreinte peut être installé afin d'obtenir une bonne empreinte et le temps de prise (ST) étant un temps pendant lequel le matériau dentaire a complètement pris et le porte-empreinte peut être retiré.

2. Distributeur dentaire motorisé (10) selon la revendication 1, comprenant en outre : une base de chargement (30) ayant une partie supérieure (75), une partie inférieure (76) et une extension (77), l'extension (77) étant formée de manière contiguë à la partie supérieure (75) et conçue pour recevoir le distributeur (10) pour le chargement.

3. Distributeur dentaire motorisé (10) selon la revendication 1, dans lequel le capuchon (34) comprend un bras d'encliquetage (37) qui s'encliquette sur un rebord de cartouche (41) de l'ensemble embout mélangeur de cartouche (20).

4. Distributeur dentaire motorisé (10) selon la revendication 1, dans lequel le capuchon (34) comprend des découpes en forme de U (71, 72) pour une insertion ou un retrait facile de la cartouche (32) de l'ensemble embout mélangeur de cartouche (20).

5. Distributeur dentaire motorisé (10) selon la revendication 1, dans lequel le matériau dentaire est un matériau d'empreinte, un matériau de reconstitution d'une partie centrale ou un matériau de restauration.

6. Distributeur dentaire motorisé (10) selon la revendication 1, comprenant en outre un bouton (1, 2) pour activer le distributeur avec un doigt lorsqu'on saisit le distributeur à la manière d'un stylo.

7. Distributeur dentaire motorisé (10) selon la revendication 1, dans lequel le distributeur est pourvu d'un bouton à bascule à positions multiples ou d'une pédale Bluetooth sans fil en communication avec le moteur électrique (23) pour modifier la vitesse de distribution.

8. Distributeur dentaire motorisé (10) selon la revendication 7, dans lequel la vitesse de distribution est modifiée par incréments.

9. Distributeur dentaire motorisé (10) selon la revendication 1, dans lequel le détecteur de courant est une puce de détection de courant.

10. Procédé de fonctionnement d'un distributeur dentaire motorisé (10) selon l'une quelconque des revendications précédentes, le procédé comprenant les étapes consistant à :
utiliser un distributeur dentaire motorisé (10) ayant des pistons emboîtés (16) pour faire sortir un matériau dentaire,
insérer un ensemble embout mélangeur de cartouche (20) dans un capuchon (34) et coupler le capuchon (34) avec un boîtier (7, 8) du distributeur (10),
sélectionner un mode de fonctionnement prédéterminé correspondant à un temps de prise du matériau dentaire de l'ensemble embout mélangeur de cartouche (20),
déterminer une taille de cartouche ou une position de pistons emboîtés sur la base de variations de courant généré, et
utiliser des signaux d'avertissement sonores correspondant au temps de travail (WT) et au temps de prise (ST) de la taille de cartouche déterminée.

11. Procédé selon la revendication 10, comprenant en outre la détermination du ré-étalonnage d'une position de repos du piston emboîté (16) pour réduire l'usure par contact périodique d'une extrémité proximale d'une base filetée de la tige du piston contre une paroi arrière et par détection d'un courant généré.

12. Procédé selon la revendication 10, dans lequel le temps de travail (WT) pour un matériau à prise rapide est d'environ 30 secondes et le temps de prise (ST) pour le matériau à prise rapide est d'environ 2 minutes 35 secondes.

13. Procédé selon la revendication 10, dans lequel le temps de travail (WT) pour un matériau à prise classique est d'environ 70 secondes et le temps de prise (ST) pour le matériau à prise classique est d'environ 5 minutes.

14. Procédé selon la revendication 10, dans lequel la position des pistons emboîtés (16) est déterminée par des détecteurs à effet Hall.
